# EUROPÄISCHE PATENTANMELDUNG

(11) **EP 0 893 616 A2**
(43) Veröffentlichungstag der Anmeldung: **27.01.1999**
(21) Anmeldenummer: 98113335.8
(22) Anmeldetag: 17.07.1998
(51) Int. Cl.: F16D 67/06

(54) **Elektromagnetisch betätigte Reibscheiben-Kupplungs-Bremskombination**

(30) Priorität: 23.07.1997 DE 19731661
(71) Anmelder: ZF FRIEDRICHSHAFEN Aktiengesellschaft, 88038 Friedrichshafen (DE)
(72) Erfinder: Schneider, Rudolf, 88074 Meckenbeuren (DE)

(57) **Zusammenfassung**

Bei der erfindungsgemäßen elektromagnetisch betätigten Reibscheiben-Kupplungs-Brems-Kombination ist eine zwischen zwei Ankerscheiben (12, 14) der Ankergruppe (10) wirkende Axialfederung vorgesehen. Beim Umschaltvorgang kann sich die eine Ankerscheibe (12) bereits zum zuschaltenden Magneten (1) bewegen, wenn die andere Ankerscheibe (14a) aufgrund der sich erst allmählich abbauenden Axialkraft des abschalten Magneten (3) noch anliegt. Eine steife Federauslegung bewirkt, daß von der zuschaltenden Ankerscheibe (12) auf die abschaltende Ankerscheibe (14) eine erhebliche axiale Abzugskraft ausgeübt wird, die das Lösen der abschaltenden Ankerscheibe (14) vom Magneten (3) unterstützt. Es wird eine erhebliche Verkürzung der Ansprechzeit erzielt.

## Beschreibung

Die Erfindung betrifft eine elektromagnetisch betätigte Reibscheiben-Kupplungs-Brems-Kombination mit zwei, axial zwischen einem Kupplungs- und einem Bremsmagneten angeordneten, drehfest, jedoch axial federnd mit einer Abtriebswelle verbundenen Ankerscheiben, mit einer ersten, zwischen der Abtriebswelle und den Ankerscheiben wirkende Axialfederung und einer zweiten, zwischen den Ankerscheiben wirkenden Axialfederung.

Elektromagnetisch betätigte Kupplungs-Brems-Kombinationen werden aufgrund ihres einfachen Aufbaus und der günstigen Außenabmessungen z.B. bei Textilmaschinen, Verpackungs-, Druck- und sonstigen Maschinen vielfach eingesetzt.

Die dabei geforderten Eigenschaften sind neben einer spielfreien und drehsteifen Übertragung von hohen Kupplungsmomenten, hohe Bremsmomente und insbesondere bei Webmaschinen eine sehr kurze Ansprechzeit der Bremse nach einem Stoppsignal, welches durch eine Störung z.B. eines gerissenen Fadens ausgelöst wird.

Die DE 31 16 902 zeigt eine elektromagnetisch betätigte Reibscheiben-Kupplungs-Brems-Kombination mit einer einzigen axial gefederten Ankerscheibe, mit der bereits sehr kurze Schaltzeiten erreichbar sind. Die Schaltzeiten lassen sich mit einer einscheibigen Bauweise jedoch nicht weiter verkürzen, da eine Schaltbewegung z.B. von der Kupplung zur Bremse erst dann eintritt, wenn die axiale Haftkraft des kupplungsseitigen Magnetkreises nach dem Abklingen des Erregerstromes weitgehend abgebaut ist. Dasselbe gilt auch für eine zweischeibige Ausführung mit einer zumindest in Zugrichtung starren Verbindung der Reibscheiben, wie sie in der FR 2 097 274 offenbart ist.

In der DE Auslegeschrift 1 265 843 ist eine elektromagnetisch betätigte Reibungskupplung und -bremse offenbart, bei der eine Kupplungs- und eine Bremsscheibe jeweils axial federnd auf einer Welle befestigt sind und unabhängig voneinander den auf sie wirkenden magnetischen Axialkräften folgen können. Als nachteilig wird die Möglichkeit des gleichzeitigen Anliegens und Übertragens des vollen Brems- bzw. Kupplungsmoments beider Reibscheiben gesehen. Hierbei können sehr hohe innere Verspannungen auftreten, die zu Bauteilzerstörungen und hohem Verschleiß führen können.

Schließlich offenbart die DE 33 35 914 ein als nächstliegender Stand der Technik betrachtetes Kupplungs-Brems-Aggregat mit zwei Scheiben, wobei die Kupplungsscheibe axial federnd an einem Halteteil befestigt ist, und die Bremsscheibe axial federnd an der Kupplungsscheibe befestigt ist. Dadurch wird der Vorteil erzielt, daß bei einem Umschaltvorgang diejenige Reibscheibe, die vom eingeschalteten Elektromagneten angezogen wird, schon an dem eingeschalteten Elektromagneten anliegen kann, ehe die andere Reibscheibe vom nunmehr ausgeschalteten Elektromagneten abgerückt ist, da dieser Elektromagnet kurzfristig noch einen Restmagnetismus aufweist. Auch bei dieser Lösung ist der kritische Betriebsfall des gleichzeitiges Anliegens der beiden Reibscheiben möglich, wobei jeweils nahezu das volle Brems- bzw. Kupplungsmoment übertragen wird. Zwar ließe sich dieser Betriebsfall durch eine entsprechend steife Auslegung der Feder zwischen den beiden Scheiben vermeiden, jedoch würde dadurch ein anderer Nachteil erzeugt. Konstruktionsbedingt würde die hohe Federkraft bei eingeschaltetem Bremsmagneten ständig gegen die Magnetkraft auf die Bremsscheibe wirken und daher das Bremsmoment reduzieren, so daß beim Einschalten der Bremse längere Rutschzeiten entstünden. Die gezeigte Anordnung benötigt außerdem einen erheblichen axialen Bauraum und ist aus sehr vielen Einzelteilen aufgebaut, so daß die Herstellung und Montage kostenintensiv ist.

Aufgabe der Erfindung ist es daher, eine elektromagnetisch betätigte Reibscheiben-Kupplungs-Brems-Kombination mit weiter verkürzter Schaltzeit zu schaffen, die die Nachteile der bekannten Lösungen vermeidet.

Die Aufgabe wird mit einer, auch die kennzeichnenden Merkmale des Hauptanspruchs aufweisenden Reibscheiben-Kupplungs-Brems-Kombination gelöst.

Die beiden Ankerscheiben sind als Baugruppe durch eine erste Axialfederung mit geringer Federsteifigkeit gegenüber der Abtriebswelle federnd verbunden. Diese Federung ermöglicht axiale Auslenkungen in beide Richtungen, also sowohl zum Kupplungs- als auch zum Bremsmagneten hin. Bei der Auslenkung in mindestens eine Richtung erzeugt die Federung eine axiale Rückstellkraft, die entgegen der magnetischen Kraft wirkt. Die für die Momentenübertragung maßgebliche Axialkraft zwischen Ankerscheibe und Bremse bzw. Kupplung wird dabei um den Betrag der Rückstellkraft verkleinert.

Es ist daher vorteilhaft, wenn die Federelemente dieser ersten Axialfederung eine geringe Federsteifigkeit aufweisen, die so bemessen ist, daß die axiale Federkraft bei maximaler Auslenkung nicht größer als etwa 5% - 10% der maximalen magnetischen Axialkraft der Kupplung bzw. der Bremse ist. Stationär ist entweder die Kupplung oder die Bremse betätigt. In mindestens einem der beiden Fälle ist diese erste Axialfederung ausgelenkt.

Die zweite Axialfederung wirkt nur zwischen den beiden Ankerscheiben. Sie wird lediglich ausgelenkt während eines Umschaltvorgangs, wenn dynamische axiale Kräfte wirken und/oder der Magnetfluß des abschaltenden Elektromagneten noch eine Kraftwirkung ausübt. Die Federkraft der zweiten Axialfederung entspricht bei maximaler Auslenkung etwa 70% - 90% der maximalen magnetischen Axialkraft auf eine der Ankerscheiben. Die maximale Auslenkung liegt vor, wenn beide Ankerscheiben an den zugeordneten Magneten anliegen. Ihr maximaler Abstand ist dann gegenüber der Ruhelage um die maximale Auslenkung vergrößert.

Durch diese Federauslegung wird der Vorteil erzielt, daß beim Umschaltvorgang die eine Ankerscheibe sich bereits zum zuschaltenden Magneten (z.B. der Bremse) bewegen kann, wenn die andere aufgrund der sich erst allmählich abbauenden Haftkraft des abschalten Magneten (z.B. der Kupplung) noch anliegt. Durch die steife Federauslegung wird hierbei gegenüber den bekannten Lösungen der Vorteil erzielt, daß von der zuschaltenden Ankerscheibe auf die abschaltende Ankerscheibe eine erhebliche Abzugskraft ausgeübt wird, die einerseits das Lösen der abschaltenden Ankerscheibe vom Magneten unterstützt und gleichzeitig verschleißintensive hohe Überschneidungen verhindert, die beim gleichzeitigen Anliegen beider Ankerscheiben auftreten würden. Selbst bei gleichzeitig aktiver Kupplung und Bremse ist nur ein geringes Verspannmoment übertragbar, so daß die Gefahr einer Bauteilzerstörung bei einer fehlerhaften gleichzeitigen Ansteuerung von Kupplung und Bremse wesentlich geringer ist.

Insgesamt wird eine sehr deutliche Verkürzung der Ansprechzeit erzielt.

In einer vorteilhaften Ausgestaltung der Erfindung sind die Federelemente der zwischen den Ankerscheiben wirkenden zweiten Axialfederung in mindestens eine der Ankerscheiben integriert, so daß diese in sich federnd ausgebildet ist. Hierdurch wird in vorteilhafter Weise Bauraum eingespart, und die abzubremsenden Drehmassen werden klein gehalten. Darüber hinaus wird die Teilezahl und damit auch der Montageaufwand reduziert.

Bei einer vorteilhaften Ausgestaltung einer integrierten Axialfederung sind die Federelemente als bogenförmige Biegeschenkel ausgebildet, die sich in Umfangsrichtung, jeweils zwischen einem Befestigungspunkt der Ankerscheibe mit der Abtriebswelle und einem, einen radial inneren Bereich der Ankerscheibe mit einem radial äußeren Bereich der Ankerscheibe verbindenden Steg erstrecken. Zwischen den Stegen sind im wesentlichen in Umfangsrichtung ausgerichtete Schlitze vorgesehen, die den radial inneren Bereich der Ankerscheibe vom radial äußeren Bereich der Ankerscheibe trennen.

Eine magnetische Kraft ist im wesentlichen nur auf den radial äußeren Bereich der Ankerscheibe wirksam. Die gewünschte Federsteifigkeit läßt sich sehr exakt durch entsprechende Dimensionierung von Länge und Biegequerschnitt der Biegeschenkel herstellen.

Die Schlitze sind sehr einfach durch Laserschnitte herstellbar.

Eine alternative Ausgestaltung einer integrierten Axialfederung ist durch einen ringscheibenförmigen Bereich mit verringerter axialer Materialstärke gegeben. Für eine kleinere Federsteifigkeit oder größere Federwege ist es möglich, mehrere Gruppen von Schlitzen in verschiedenen Radienbereichen vorzusehen, wobei diese dann um eine halbe Schlitzbreite zueinander winkelversetzt vorzusehen sind.

In einer vorteilhaften Ausführungsform der Erfindung sind die Federelemente der ersten Axialfederung als zu den Ankerscheiben konzentrische Ringe ausgebildet, die an ihren am Umfang gleichmäßig verteilten Befestigungspunkten abwechselnd mit der Reibscheibe und der Abtriebswelle spielfrei verbunden sind. Die Bogensegmente der Ringe zwischen den Befestigungspunkten wirken dabei wiederum als Biegeschenkel. Hierdurch wird eine spielfreie, drehsteife und hoch belastbare axial federnde Verbindung zwischen Abtriebswelle und Ankerscheibe hergestellt.

Im folgenden wird die Erfindung anhand der beiliegenden Zeichnungen näher erläutert wobei
- Fig. 1: einen Längsschnitt durch eine erfindungsgemäße Kupplungs-Brems-Kombination und
- Fig. 2: eine Draufsicht auf die Kupplungs-Ankerscheibe der Kupplungs-Brems-Kombination zeigen.

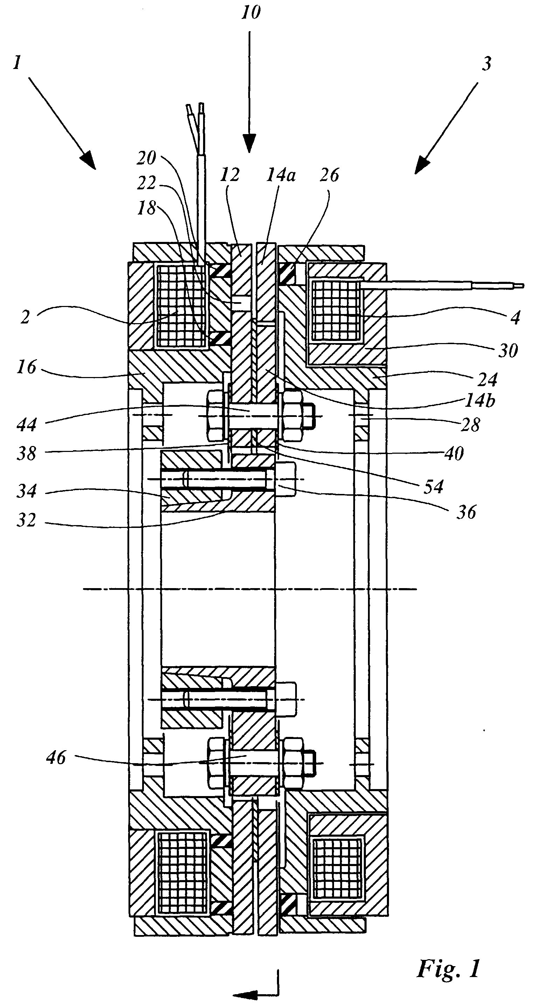

Fig. 1 zeigt eine erfindungsgemäße elektromagnetisch betätigte Reibscheiben-Kupplungs-Brems-Kombination. Die Ankergruppe 10 mit zwei Ankerscheiben 12, 14 ist axial zwischen einem Kupplungs- 3 und einem Bremsmagneten 1 angeordnet. Der Bremsmagnet 1 ist fest mit dem nicht dargestellten Gehäuse verbunden. Der Rotor 24 der Kupplung ist an den gleichmäßig am Umfang verteilten Befestigungsbohrungen 28 an einen nicht dargestellten Antrieb koppelbar. Der Magnetkörper 30, der die Kupplungsmagnetspule 4 aufnimmt, ist fest mit dem Gehäuse verbunden, so daß keine Schleifringkontakte für die Stromversorgung der Kupplungsmagnetspule erforderlich sind. Die Ankergruppe 10 ist mittels Ringfedern 38, 40 drehfest und spielfrei, jedoch axial federnd mit einem Mitnehmer 32 verbunden.

Der Mitnehmer 32 ist zwischen den Ringfedern 38, 40 und der nicht dargestellten Abtriebswelle angeordnet. Er ist durch einen konischen Spannring 34 mit Spannschrauben 36 reibschlüssig mit der Abtriebswelle verbindbar. Die Ringfedern 38, 40 sind an ihren am Umfang gleichmäßig verteilten Befestigungspunkten 44, 46 abwechselnd mit der Ankergruppe 10 und dem Mitnehmer 32 spielfrei verschraubt.

In einem stationären Betriebsfall liegt die Ankergruppe 10 entweder am Bremskörper 16 an oder am kupplungsseitigen Rotor 24, je nachdem ob gerade die Bremsmagnetspule 2 oder die Kupplungsmagnetspule 4 von Strom durchflossen ist. Abhängig von der Ruhelage, üben die Ringfedern 38,40 in mindestens einem dieser beiden Fälle eine Rückstellkraft aus, welche das übertragbare Reibmoment zwischen Ankergruppe und jeweiligem Reibkörper 16, 24 reduziert. Die Federsteifigkeit dieser Axialfederung ist deshalb klein gewählt, damit das übertragbare Brems- bzw. Kupplungsmoment nicht zu sehr reduziert wird.

Erfindungsgemäß ist zwischen den beiden Ankerscheiben 12, 14 der Ankergruppe 10 eine weitere Axialfederung vorgesehen, wobei die Federkraft bei maximaler Auslenkung nahezu der maximalen magnetischen Axialkraft auf eine der Ankerscheiben entspricht.

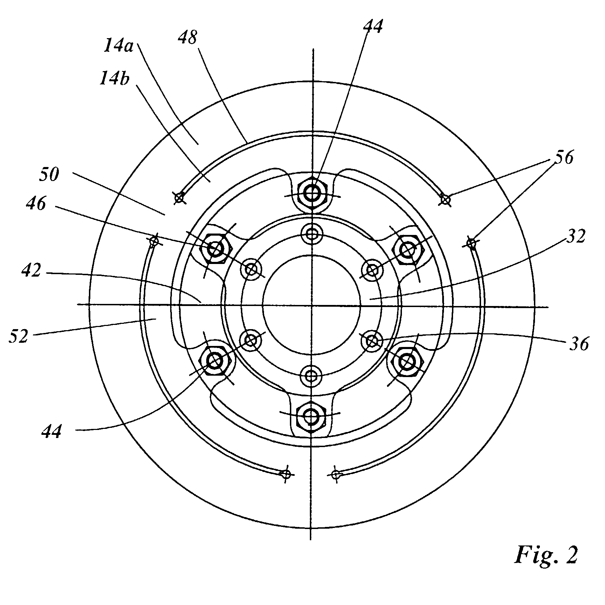

Diese Axialfederung ist in der dargestellten Ausführungsform in vorteilhafter Weise in die Kupplungs-Ankerscheibe 14 integriert, welche in Fig. 2 in der Draufsicht dargestellt ist. Die Federelemente dieser integrierten Axialfederung sind als bogenförmige Biegeschenkel 52 ausgebildet. Diese erstrecken sich in Umfangsrichtung jeweils zwischen einem Befestigungspunkt 44 der Ankerscheibe 14 mit dem Mitnehmer 32 und einem, einen radial inneren Bereich 14b der Ankerscheibe 14 mit einem radial äußeren Bereich 14a der Ankerscheibe verbindenden Steg 50. Die Stege 50 sind gegenüber den Befestigungspunkten 44 winkelversetzt angeordnet. Zwischen den Stegen 50 sind im wesentlichen in Umfangsrichtung ausgerichtete Schlitze 48 vorgesehen. Die Ankerscheibe 14 ist also in sich federnd ausgebildet.

In vorteilhafter Weise sind die Schlitze 48 durch einfach Laserschnitte herstellbar. Zur Verringerung der Kerbwirkung sind die Schlitze jeweils durch Bohrungen 56 begrenzt.

Der magnetisch wirksame, radial äußere Bereich 14a der Kupplungs-Ankerscheibe 14 ist hierdurch relativ zu den Befestigungspunkten 44 axial federnd auslenkbar. An den Befestigungspunkten 44 sind die beiden Ankerscheiben 12, 14b starr miteinander verschraubt. Zwischen den beiden Ankerscheiben ist eine Distanzscheibe 54 angeordnet.

In der dargestellten Ausführungsform der erfindungsgemäßen Kupplungs-Brems-Kombination ist der Kupplungsmagnet 3 einflutig mit nur einem nichtmagnetischen Kupferring 26 ausgeführt und der Bremsmagnet 1 zweiflutig mit zwei Kupferringen 18, 20 und einer Ausnehmung 22 in der Brems-Ankerscheibe 12. Es sind jedoch ebenso auch andere Kombinationen mit ein oder mehrflutigen Magneten möglich.

### Bezugszeichen

- 1: Bremsmagnet
- 2: Bremsmagnetspule
- 3: Kupplungsmagnet
- 4: Kupplungsmagnetspule
- 10: Ankergruppe
- 12: Brems-Ankerscheibe
- 14: Kupplungs-Ankerscheibe
- 16: Bremskörper
- 18: Kupferring
- 20: Kupferring
- 22: Ausnehmung
- 24: Rotor
- 26: Kupferring
- 28: Bohrung
- 30: Kupplungsmagnetkörper
- 32: Mitnehmer
- 34: Spannring
- 36: Spannschraube
- 38: Ringfeder
- 40: Ringfeder
- 42: Biegeschenkel
- 44: Befestigungspunkt Ringfeder-Ankergruppe
- 46: Befestigungspunkt Ringfeder-Mitnehmer
- 48: Schlitz
- 50: Steg
- 52: Biegeschenkel
- 54: Distanzscheibe
- 56: Bohrung

## Patentansprüche

1. Elektromagnetisch betätigte Reibscheiben-Kupplungs-Brems-Kombination mit zwei, axial zwischen einem Kupplungs- (3) und einem Bremsmagneten (1) angeordneten, drehfest, jedoch axial federnd mit einer Abtriebswelle verbundenen Ankerscheiben (12, 14) einer Ankergruppe (10), mit einer ersten, zwischen der Abtriebswelle und der Ankergruppe (10) wirkenden Axialfederung (38, 40) und einer zweiten, zwischen den Ankerscheiben (12, 14a) der Ankergruppe (10) wirkenden Axialfederung (52), dadurch **gekennzeichnet,** daß bei stationär betätigter Bremse oder Kupplung nur die -eine geringe Federsteifigkeit aufweisenden- Federelemente der ersten Axialfederung (38, 40) ausgelenkt sind, und die Federkraft der zweiten Axialfederung (52) bei maximaler Auslenkung nahezu der maximalen magnetischen Axialkraft auf eine der Ankerscheiben (12, 14a) entspricht.

2. Reibscheiben-Kupplungs-Brems-Kombination nach Anspruch 1, dadurch **gekennzeichnet,** daß die Federelemente (52) der zwischen den Ankerscheiben (12, 14a) wirkenden zweiten Axialfederung in mindestens einer der beiden Ankerscheiben integriert sind.

3. Reibscheiben-Kupplungs-Brems-Kombination nach Anspruch 2, dadurch **gekennzeichnet,** daß die Federelemente der integrierten Axialfederung als bogenförmige Biegeschenkel (52) ausgebildet sind, die sich in Umfangsrichtung, jeweils zwischen einem Befestigungspunkt (44) der Ankerscheibe (14) mit der Abtriebswelle und einem, einen radial inneren Bereich (14b) der Ankerscheibe mit einem radial äußeren Bereich (14a) der Ankerscheibe verbindenden Steg (50) erstrecken, wobei zwischen den Stegen (50) im wesentlichen in Umfangsrichtung ausgerichtete Schlitze (48) vorgesehen sind.

4. Reibscheiben-Kupplungs-Brems-Kombination nach Anspruch 3, dadurch **gekennzeichnet,** daß die Schlitze (48) als Laserschnitte ausgebildet sind.

5. Reibscheiben-Kupplungs-Brems-Kombination nach einem der Ansprüche 1 bis 4, dadurch **gekennzeichnet,** daß die Federelemente der ersten Axialfederung als zu den Ankerscheiben konzentrische Ringe (38, 40) ausgebildet sind, welche an ihren am Umfang gleichmäßig verteilten Befestigungspunkten (44, 46) abwechselnd mit der Reibscheibe und der Abtriebswelle spielfrei verbunden sind.
